# FASCICULE DE BREVET EUROPEEN

(11) **EP 1 828 058 B1**
(45) Date de publication et mention de la délivrance du brevet: **09.11.2011**
(21) Numéro de dépôt: 05824666.1
(22) Date de dépôt: 12.12.2005
(51) Int. Cl.: C01G 53/00

(54) **MATERIAU D'ELECTRODE POSITIVE OPTIMISE POUR ACCUMULATEURS AU LITHIUM, PROCEDE POUR SA REALISATION, ELECTRODE, ACCUMULATEUR ET BATTERIE METTANT EN OEUVRE CE MATERIAU**
OPTIMIERTES ANODENMATERIAL FÜR LITHIUMBATTERIEN, HERSTELLUNGSVERFAHREN DAFÜR, ELEKTRODE UND BATTERIE ZUR DURCHFÜHRUNG DES VERFAHRENS
OPTIMISED POSITIVE ELECTRODE MATERIAL FOR LITHIUM CELL BATTERIES, METHOD FOR THE PRODUCTION THEREOF, ELECTRODE, AND BATTERY FOR IMPLEMENTING SAID METHOD

(30) Priorité: 21.12.2004 FR 0453125
(43) Date de publication de la demande: 05.09.2007
(73) Titulaire: Commissariat à l'Énergie Atomique et aux Énergies Alternatives, 75015 Paris (FR)
(72) Inventeur: JOUANNEAU, Séverine, F-38600 Fontaine (FR); LE CRAS, Frédéric, F-38470 Notre Dame de L'Osier (FR); BOURBON, Carole, F-38590 Saint Michel De Saint Geoirs (FR); LIGNIER, Hélène, F-38380 Saint Laurent du Pont (FR)
(74) Mandataire: Vuillermoz, Bruno
(86) Numéro de dépôt international: PCT/FR2005/051074
(87) Numéro de publication internationale: WO 2006/067345

(56) Documents cités:
- PATENT ABSTRACTS OF JAPAN vol. 2002, no. 09, 4 septembre 2002 (2002-09-04) & JP 2002 158007 A (TANAKA CHEMICAL CORP), 31 mai 2002 (2002-05-31)
- G. PERENTZIS, E. HOROPANITIS, I. SAMARAS, S. KOKKOU, L. PAPADIMITRIOU: "Synthesis and electrochemical study of Li-Mn-Ni-O cathodes for lithium battery applications" J. SOLID STATE ELECTROCHEM., vol. 8, no. 1, 2003, pages 51-54, XP002346118
- ITO Y ET AL: "Relation between crystal structures, electronic structures, and electrode performances of LiMn2-xMxO4 (M = Ni, Zn) as a cathode active material for 4V secondary Li batteries" JOURNAL OF POWER SOURCES, ELSEVIER SEQUOIA S.A. LAUSANNE, CH, vol. 119-121, 1 juin 2003 (2003-06-01), pages 733-737, XP004430264 ISSN: 0378-7753
- PATENT ABSTRACTS OF JAPAN vol. 1996, no. 12, 26 décembre 1996 (1996-12-26) & JP 08 217452 A (TOSOH CORP), 27 août 1996 (1996-08-27) cité dans la demande
- J.-H. KIM, S.-T. MYUNG, C.S. YOON, S.G. KANG, Y.-K. SUN: "Comparative study of LiNi0.5Mn1.5O(4-d) and LiNi0.5Mn1.5O4 cathodes having two crystalographic structures : Fd-3m and P4(3)32" CHEM. MATER., vol. 16, no. 5, 2004, pages 906-914, XP002346119 cité dans la demande

## Description

### DOMAINE TECHNIQUE

La présente invention a trait à un nouveau composé de structure spinelle, de type oxyde mixte à base de Ni, Mn et Li, non stoechiométrique et de paramètre de maille bien déterminé.

Un tel composé présente des propriétés optimisées, en termes de stabilité et de ses performances électrochimiques.

Par conséquent, il est avantageusement utilisé dans des électrodes, batteries et accumulateurs au lithium.

### ETAT DE LA TECHNIQUE ANTERIEURE

Les accumulateurs au lithium sont de plus en plus utilisés comme sources d'énergie autonome, en particulier dans les équipements portables, où ils tendent à remplacer progressivement les accumulateurs nickel-cadmium (NiCd) et nickel - hydrure métallique (NiMH). Cette évolution découle du fait que les performances des accumulateurs au lithium, en terme de densité d'énergie (Wh/kg, Wh/1), sont largement supérieures à celles des deux technologies précitées.

Les composés actifs d'électrode utilisés dans ces accumulateurs répondent principalement aux formules LiCoO₂, LiNiO₂ et LiMn₂O₄ pour l'électrode positive, et du carbone (graphite, coke...) pour l'électrode négative. Les capacités théoriques et pratiques de ces composés sont respectivement de 275 mAh/g et 140 mAh/g pour LiCoO₂ et LiNiO₂, et de 148 mAh/g et 120 mAh/g pour LiMn₂O₄, pour une tension de fonctionnement par rapport au lithium métallique voisine de 4 Volts.

Le composé existant LiNi^{II}_{0.5}Mn^{IV}₁.₅O₄, de structure spinelle, est électro-chimiquement actif de manière réversible à un potentiel de 4.7 - 4.8 V/Li/Li⁺. Sa capacité spécifique théorique est de 147 mAh/g. Ceci lui confère une densité d'énergie théorique de l'ordre de 700 Wh/Kg/Li⁺/Li.

Malgré des études nombreuses et variées sur les matériaux dérivés de LiMn₂O₄, peu de données sont disponibles sur le composé LiNi₀.₅Mn₁.₅O₄, Principalement, les informations disponibles concernent l'optimisation de sa synthèse, ainsi que le comportement et les performances électrochimiques de ce matériau, en tant qu'électrode positive pour batterie au lithium.

Il est à noter que, sous le terme "performances électrochimiques" d'un matériau, deux notions distinctes sont concernées :
- la capacité à répondre à de fortes densités de courant (puissance) ; et
- la capacité à posséder une longue durée de vie en cyclage (capacité élevée et stable en cyclage).

Ces deux propriétés peuvent être obtenues simultanément pour un composé donné, cependant ce caractère simultané n'est pas systématique. Selon l'application visée, l'une et/ou l'autre de ces propriétés est donc recherchée.

Le document JP-A-8 217452 divulgue un matériau de structure spinelle, de formulation LiNiₓMn₂₋ₓO₄ dans laquelle x est compris entre 0 et 0.5 inclus. Il est rapporté que ce composé présente de bonnes propriétés en cyclage (sans spécification), du fait de l'utilisation comme précurseur d'un oxyde de manganèse MnO₂ présentant une surface spécifique de 150 à 500 m²/g.

Le document FR 2 831 993 concerne le dopage d'un composé de formule générale LiMn₂(ₓ₊y)MₓM'_{y}O₄ par un élément M', avec M = Ni ou Co et M' = Ti, Al, Co, Mo, x et y strictement positifs. Il en résulte un matériau fonctionnant bien à haut potentiel, avec une capacité élevée et de bonnes propriétés en cyclage.

En outre, d'autres travaux, comme la publication de Sun et al. (Electrochimica Acta 48(2003) 503), préconisent un traitement de surface du matériau (à base de ZnO par exemple) pour améliorer les performances en cyclage.

Encore plus récemment, Kim et al. (Chem. Mat. 16(2004), 906) ont montré qu'un dérivé de LiNi_{0.5}Mn_{1.5}O₄, non stoechiométrique, de structure spinelle Fd-3m, de formulation Li_{1.00}Ni_{0.48}Mn_{1.5}O_{3.92} et de paramètre de maille 8,172 Å présentait, par rapport à son homologue purement stoechiométrique de paramètre de maille 8,166 Å, une meilleure cinétique d'insertion, et donc une meilleure réponse à forte densité de courant.

Ainsi, des valeurs de 137 mAh/g ont été obtenues pour les deux composés à C/7, alors qu'à 3C, une valeur de 110 mAh/g a été mesurée pour le composé non stoechiométrique, contre 60 mAh/g pour le composé stoechiométrique. Ces meilleures propriétés ont été attribuées par les auteurs à la seule différence de stoechiométrie, bien que d'autres facteurs cruciaux, en particulier la morphologie et la taille de grain, n'aient pas été pris en compte.

La demande de brevet JP 2002 158007 A porte également sur le composé de formule LiNi_{0.5}Mn_{1.5}O₄, avec des paramètres maille de 8,18 Å ou plus. Il est certes montré que des paramètres de maille compris entre 8,174 et 8,179 Å peuvent être obtenus, mais uniquement après traitement thermique, et donc modification de la composition. En outre, la répartition Mn^{III}/Mn^{IV} dans ce composé reste indéterminée.

Des procédés de synthèse de cette classe de composés ont également été décrits (Perentzis et al., J. SOLID STATE ELECTROCHEM. 8(1) 2003, 51-54; Ito et al., JOURNAL OF POWER SOURCES 119-121 (2003), 733-37). Plus précisément, le document ITO *et al.* concerne la synthèse de composés, par exemple de formule LiNi_{0.5}Mn_{1.5}O₄, obtenus à partir de précurseurs de lithium, de manganèse et de nickel préchauffés à 600°C pendant 24 heures à l'air, puis chauffés 24 heures en présence d'oxygène entre 700 et 800°C.

Le développement actuel des accumulateurs au lithium met en évidence le besoin d'identifier de nouveaux composés, servant de matériau d'électrode positive et présentant des propriétés électrochimiques optimisées, en particulier en terme de capacité cyclée et de stabilité en cyclage de cette capacité.

### EXPOSE DE L'INVENTION

Dans le cadre de l'invention, le Demandeur a obtenu des composés de structure spinelle, de type oxydes mixtes à base de nickel, de manganèse et de lithium, non stoechiométriques, de formulation et de morphologie nouvelles et bien déterminées, présentant les propriétés recherchées.

Ainsi, la présente invention concerne un composé de structure spinelle, de formule Li_{y}Ni_{0.5}Mn_{1.5-x}^{IV}Mnₓ^{III}A_{z}O_{4-d}, avec :
- 0,02 ≤ x ≤ 0,35 ;
- d > 0;
- A choisi dans le groupe comprenant Na, K, Mg, Nb, A1, Ni, Co, Zr, Cr, Fe, Cu, Zn, Ti, Si et Mo ;
- 0,8 ≤ y ≤ 1,2;
- 0 ≤ z ≤ 0,1 ;
et de paramètre de maille compris entre 8,174 et 8,179 Å.

Dans cette formulation, x quantifie donc la teneur en manganèse au degré d'oxydation III, d une déficience en oxygène et z la contribution en élément dopant A.

Généralement, un composé selon l'invention répond à la formule Li_{y}Ni_{0.5}Mn₁.₅₋ₓ^{IV}Mnₓ^{III}O_{4-d}.

Avantageusement, la formule d'un tel composé est LiNi_{0.5}Mn_{1.3}^{IV}Mn_{0.2}^{III}O_{3.9}.

Selon un autre mode de réalisation, le composé a une formule dans laquelle z est supérieur à 0, c'est-à-dire 0 < z ≤ 0,1, ce qui signe la présence d'un élément dopant A.

Il s'avère qu'un composé selon l'invention présente des propriétés optimisées en termes de stabilité de ses performances électrochimiques dans le cadre de sa mise en oeuvre au sein d'un accumulateur au lithium, au cours des cyclages successifs. Ainsi, des valeurs de 120 à 140 mAh/g ont été observées à C/5, avec de 0.03 à 0.30% de perte par cycle sur une centaine de cycles.

En effet, le Demandeur a constaté que d'une manière générale, un composé stoechiométrique présentait une perte en cyclage importante, de l'ordre de 9% par cycle, dans les conditions testées, alors que, toutes choses égales par ailleurs (en particulier à surface spécifique équivalente), des composés non stoechiométriques dérivés présentaient une conservation de capacité améliorée. Or, dans l'optique d'une application industrielle, les taux de perte par cycle à atteindre doivent généralement être de l'ordre de 0.04-0.05%. Pour les composés selon l'invention, il a été possible d'identifier une fenêtre de composition dans laquelle les valeurs expérimentales obtenues convergent vers de telles valeurs. Cette fenêtre correspond à des spinelles paramètres compris entre 8,174 et 8,179 Å, avec un optimum pour 8,176-8,177 Å.

De manière avantageuse, les composés selon l'invention présentent donc un paramètre de maille compris entre 8,176 et 8,177 Å.

Le document précité Kim *et al* révélait certes, de manière contestable, l'avantage d'un composé non stoechiométrique, mais pour un paramètre de maille différent et pour des propriétés cinétiques, mais en revanche n'abordait pas le problème de la stabilité en cyclage. Or, comme déjà évoqué, ces propriétés sont a priori décorrélées, voire antinomiques. En effet, la stabilité en cyclage passe d'abord par la stabilité structurale et peut être ensuite améliorée par une diminution de la surface de contact avec l'électrolyte (augmentation de la taille des particules, réduction de la surface spécifique). Au contraire, l'amélioration de la cinétique passe généralement par la réduction des chemins de diffusion, classiquement obtenue par une diminution de la taille des grains, et impliquant donc une augmentation de la surface spécifique.

Il est par ailleurs souhaitable que le composé de l'invention présente une morphologie bien définie, à savoir qu'il possède une taille de particules supérieure à 1 µm, préférentiellement comprise entre 5 et 10 µm, et qu'il ait une surface spécifique comprise entre 1 et 2 m²/g.

Cette morphologie particulière permet de limiter la réactivité vis-à-vis de l'électrolyte à haut potentiel et contribue donc également à limiter les pertes de capacité au cours du cyclage, à température ambiante comme à 55°C, température à laquelle la réactivité est habituellement amplifiée.

Un parfait contrôle des paramètres de synthèse, notamment de la température et de la durée de traitement ainsi que du type de refroidissement employés, sont nécessaires à l'obtention des composés selon l'invention. L'invention concerne donc également le procédé de préparation desdits composés. Même si plusieurs combinaisons sont envisageables, les étapes essentielles d'un tel procédé sont les suivantes :
- mélange des précurseurs dans des conditions stoechiométriques, avec un excès de lithium de 1 à 5% molaire ;
- premier traitement thermique à une température comprise entre 550 et 600°C ;
- second traitement thermique à une température sensiblement supérieure à 700°C, préférentiellement supérieure à 800°C, combiné à un refroidissement en milieu contenant de l'oxygène, pour obtenir le paramètre de maille escompté.

Lors de la première étape, les précurseurs nécessaires à l'obtention de la composition souhaitée sont donc intimement mélangés dans des conditions stoechiométriques, avec un excès de lithium de 1 à 5% molaire. Les précurseurs sont typiquement à base de carbonates (carbonate de nickel, carbonate de lithium et carbonate de manganèse) ou encore du dioxyde de manganèse de type béta, la lithine (LiOH.H₂O) et l'oxyde de nickel (NiO).

Le premier traitement thermique à haute température (environ entre 550 et 600°C) de plusieurs heures doit permettre la bonne incorporation du lithium à l'oxyde mixte de Ni et de Mn.

Le second traitement thermique, à plus haute température encore (supérieure à 700°C et de préférence au dessus de 800°C), pendant plusieurs heures, a pour but d'entraîner une perte d'oxygène, tout en créant la morphologie souhaitée. Avantageusement, ce traitement sera d'autant plus long que la température de traitement sera basse.

Enfin un refroidissement (plus ou moins lent), adapté au traitement précédent, est pratiqué en milieu contenant de l'oxygène, de sorte qu'un retour d'oxygène partiel soit permis. Il doit persister une certaine quantité de manganèse au degré d'oxydation III, correspondant à la fourchette de paramètres de maille selon l'invention, à l'issue du protocole. Un compromis entre le second traitement et le type de refroidissement permet d'obtenir le produit de l'invention.

En raison des propriétés électrochimiques avantageuses du composé revendiqué, l'invention concerne également les électrodes, les accumulateurs qui présentent à l'électrode négative soit du lithium métallique (type lithium-métal), soit un matériau d'insertion du lithium (type lithium-ion) comprenant comme matériau actif ledit composé, et de façon plus élaborée les batteries constituées d'accumulateurs en série.

Les électrodes sont composées de préférence d'une nanodispersion du matériau actif, avec un additif conducteur électronique (par exemple carbone) et/ou un liant organique conférant de la conduction ionique et des propriétés mécaniques (par exemple polyéther, polyester, polymères à base de méthylméthacrylate, d'acrylonitrile, de fluorure de vinylidène), déposée sur des feuilles métalliques servant de collecteurs de courant. Un séparateur mécanique entre les deux électrodes est imbibé d'électrolyte (conducteur ionique). Celui-ci est généralement constitué d'un sel, dont le cation est au moins en partie l'ion lithium (LiClO₄, LiAsF6, LiPF₆, LiBF₄, LiCH₃SO₃,...) et d'un solvant polaire aprotique (éthylène ou propylène carbonate, diméthylcarbonate, diéthylcarbonate, méthyléthylcarbonaye...).

L'ensemble de ces dispositifs confère les performances requises, décrites précédemment.

### EXEMPLE DE REALISATION

L'invention et les avantages qui en découlent ressortiront mieux des exemples de réalisation qui suivent. Ces exemples ne sont cependant en aucun cas limitatifs.

### Exemple 1 :

Un mélange intime de précurseurs à base de carbonates (10,535 g de carbonate de nickel, 6,468 g de carbonate de lithium et 30,090 g de carbonate de manganèse) dans les conditions stoechiométriques avec un excès de 3% molaire en Li est réalisé par broyage au broyeur planétaire de type Retsch dans un bol de 250 ml contenant une dizaine de billes de 20 mm de diamètre durant 20 heures à 400 tr/min, en présence d'hexane en volume suffisant pour submerger la poudre. Un séchage d'une nuit à 60°C est réalisé sur le mélange, qui est ensuite traité à 600°C (10 heures), puis à 900°C (15 heures), suivi d'un refroidissement à température ambiante à la vitesse de 1°C/min. Le composé obtenu possède les caractéristiques de l'invention.

### Exemple 2 :

Dans un autre mode de réalisation, les précurseurs utilisés sont constitués du dioxyde de manganèse de type beta, de la lithine (LiOH.H₂O) et de l'oxyde de Ni, NiO. Un mélange intime des précurseurs est réalisé par broyage au broyeur planétaire de type Retsch durant deux heures en présence d'hexane. Le mélange est ensuite séché une nuit à 60°C puis est traité à 550°C pendant 60 heures, puis à 700°C (15 heures), suivi d'un retour à la température ambiante à la vitesse de 20°C/min. Le composé obtenu possède également les caractéristiques de l'invention.

### Exemple 3 :

Une batterie lithium-métal est réalisée comprenant une électrode négative constituée d'un disque de lithium (diamètre 16 mm, épaisseur 130 microns) déposé sur un disque de nickel servant de collecteur de courant, une électrode positive constituée d'un disque de 14 mm prélevé sur un film composite de 50 microns d'épaisseur comprenant le matériau de l'invention préparé selon l'exemple 1 (80% en masse), du noir de carbone (8% en masse) en guise de matériau conducteur et de l'hexafluorure de polyvinylidène (12% en masse) en guise de liant, le tout étant déposé sur un collecteur de courant en aluminium (feuille de 25 microns d'épaisseur) et un séparateur imbibé de l'électrolyte liquide LiPF₆ 1M en solution dans du carbonate de propylène. A 25°C, une telle batterie délivre une capacité de 130 mAh/g, stable en cyclage à C/5 (0.1 % de pertes par cycle).

### Exemple 4 :

Une batterie lithium-ion est réalisée avec une électrode composite contenant le matériau actif Li₄Ti₅O₁₂ (électrode négative), une électrode composite contenant le matériau de l'invention préparé selon l'exemple 1 (électrode positive), un séparateur imbibé d'électrolyte liquide constitué de LiPF₆ 1M en solution dans du carbonate de propylène. L'électrode composite Li₄Ti₅O₁₂ est constituée de 80% en masse de matière active, de noir de carbone (8% en masse) en guise de matériau conducteur et de l'hexafluorure de polyvinylidène (12% en masse) en guise de liant, le tout étant déposé sur un collecteur de courant en aluminium. Les performances sont semblables à celles obtenues dans l'exemple 3.

### Exemple 5 :

Un accumulateur Li-ion prototype (prototype bobiné avec électrodes double-face) de 450 mAh, constitué du matériau de l'invention couplé à Li₄Ti₅O₁₂ a été réalisé en emballage souple à partir d'électrodes épaisses de titane et de spinelles enduites à 300 µm (1,5 mAh/cm²/face). Ces prototypes de 30 Ah/kg présentent en fonctionnement des capacités similaires à celles obtenues en petit format.

## Revendications

1. Composé de structure spinelle, ***caractérisé* :**
• **en ce qu'**il a pour formule Li_{y}Ni_{0.5}Mn_{1.5-x}^{IV}Mnₓ^{III}A_{z}O_{4-d}, avec :
- 0,02 ≤ x ≤ 0,35 ;
- d > 0;
- A choisi dans le groupe comprenant Na, K, Mg, Nb, Al, Ni, Co, Zr, Cr, Fe, Cu, Ti, Zn, Si et Mo ;
- 0,8 ≤ y ≤ 1,2;
- 0 ≤ z ≤ 0,1;
• **en ce qu'**il présente un paramètre de maille compris entre 8,174 et 8,179 Å.

2. Composé selon la revendication 1 ***caractérisé* en ce qu'**il a une formule Li_{y}Ni_{0.5}Mn_{1.5-X}^{IV}Mn_{X}^{III}O_{4-d}.

3. Composé selon la revendication 2, ***caractérisé* en ce qu'**il a une formule LiNi_{0.5}Mn_{1.3}^{IV}Mn_{0.2}^{III}O_{3.9}.

4. Composé selon la revendication 1 ***caractérisé* en ce que** z est supérieur à 0.

5. Composé selon l'une des revendications précédentes, ***caractérisé* en ce qu'**il présente un paramètre de maille compris entre 8,176 et 8,177 Å.

6. Composé selon l'une des revendications précédentes, ***caractérisé* en ce qu'**il possède une taille de particules supérieure à 1 µm.

7. Composé selon la revendication 6, ***caractérisé* en ce qu'**il possède une taille de particules comprise entre 5 et 10 µm.

8. Composé selon l'une des revendications précédentes, ***caractérisé* en ce qu'**il présente une surface spécifique comprise entre 1 et 2 m²/g.

9. Procédé de préparation d'un composé selon l'une des revendications 1 à 8 comprenant les étapes suivantes :
- mélange de précurseur à base de lithium, nickel et manganèse dans des conditions stoechiométriques, avec un excès de lithium de 1 à 5% molaire ;
- soumission de ce mélange à un premier traitement thermique à une température comprise entre 550 et 600°C ;
- soumission dudit mélange après premier traitement thermique à un second traitement thermique à une température supérieure à 700°C, préférentiellement supérieure à 800°C, combiné à un refroidissement en milieu contenant de l'oxygène.

10. Electrode comprenant comme matériau électrochimiquement actif, un composé selon l'une des revendications 1 à 8.

11. Electrode selon la revendication 10, ***caractérisée* en ce que** le composé se présente sous forme de nanodispersion mélangée à un additif conducteur et/ou un liant organique.

12. Accumulateur comprenant au moins une première électrode selon la revendication 10 ou 11, ainsi qu'une deuxième électrode réalisée en un matériau apte à recevoir des ions lithium, lesdites électrodes étant séparées par un séparateur imbibé d'électrolyte.

13. Batterie comprenant au moins un accumulateur selon la revendication 12.

## Claims

1. Compound having a spinel structure, ***characterised* :**
• **in that** it has the formula Li_{y}Ni_{0.5}Mn_{1.5-x}^{IV}Mn_{X}^{III}A_{z}O_{4-d}, with:
- 0.02 ≤ x ≤ 0.35;
- d > 0;
- A selected from the group comprising Na, K, Mg, Nb, Al, Ni, Co, Zr, Cr, Fe, Cu, Ti, Zn, Si and Mo;
- 0.8 ≤ y ≤ 1.2;
- 0 ≤ z ≤ 0.1;
• and **in that** it has a mesh parameter of between 8.174 and 8.179 Å.

2. Compound according to Claim 1, ***characterised* in that** it has a formula Li_{y}Ni_{0.5}Mn_{1.5-x}^{IV}Mnₓ^{III}O_{4-d}.

3. Compound according to Claim 2, ***characterised* in that** it has a formula LiNi_{0.5}Mn_{1.3}^{IV}Mn_{0.2}^{III}O_{3.9}.

4. Compound according to Claim 1, ***characterised* in that** z is higher than 0.

5. Compound according to one of the preceding claims, ***characterised* in that** it has a mesh parameter of between 8.176 and 8.177 Å.

6. Compound according to one of the preceding claims, ***characterised* in that** it has a particle size above 1 µm.

7. Compound according to Claim 6, ***characterised* in that** it has a particle size of between 5 and 10 µm.

8. Compound according to one of the preceding claims, ***characterised* in that** it has a specific surface area of between 1 and 2 m²/g.

9. Method for preparing a compound according to one of Claims 1 to 8, comprising the following steps:
- mixing of lithium, nickel and manganese based precursor in stoichiometric conditions with a lithium excess of 1 to 5 mol%;
- the mixture is subjected to a first heat treatment at a temperature of between 550 and 600°C;
- after the first heat treatment, the mixture is subjected to a second heat treatment at a temperature above 700°C, preferably above 800°C, combined with a cooling in oxygen containing medium.

10. Electrode comprising a compound according to one of Claims 1 to 8, as an electrochemically active material.

11. Electrode according to Claim 10, ***characterised* in that** the compound is in the form of a nanodispersion mixed with a conducting additive and/or an organic binder.

12. Cell battery comprising at least one first electrode according to either of Claims 10 and 11, and a second electrode made from a material suitable for receiving lithium ions, the said electrodes being separated by a separator soaked with electrolyte.

13. Battery comprising at least one cell battery according to Claim 12.

## Patentansprüche

1. Zusammensetzung mit einer Spinellstruktur, **dadurch gekennzeichnet:**
• **dass** sie als Formel Li_{y}Ni_{0.5}Mn_{1,5-x}^{IV}Mnₓ^{III}A_{z}O_{4-d} hat, wobei:
- 0,02 ≤ x ≤ 0,35;
- d > 0;
- A aus der Gruppe ausgewählt ist, die Na, K, Mg, Nb, Al, Ni, Co, Zr, Cr, Fe, Cu, Ti, Zn, Si und Mo umfasst;
- 0,8 ≤ y ≤ 1,2;
- 0 ≤ z ≤ 0,1;
• **dass** sie einen Gitterparameter von 8,174 bis 8,179 Å aufweist.

2. Zusammensetzung nach Anspruch 1, **dadurch gekennzeichnet, dass** sie eine Formel Li_{y}Ni_{0.5}Mn_{1,5-x}^{IV}Mnₓ^{III}O_{4-d} hat.

3. Zusammensetzung nach Anspruch 2, **dadurch gekennzeichnet, dass** sie eine Formel LiNi_{0,5}Mn₁,₃^{IV}Mn₀,₂^{III}O₃,₉ hat.

4. Zusammensetzung nach Anspruch 1, **dadurch gekennzeichnet, dass** z größer 0 ist.

5. Zusammensetzung nach einem der vorhergehenden Ansprüche, **dadurch gekennzeichnet, dass** sie einen Gitterparameter von 8,176 bis 8,177 Å aufweist.

6. Zusammensetzung nach einem der vorhergehenden Ansprüche, **dadurch gekennzeichnet, dass** sie eine Partikelgröße von über 1 µm besitzt.

7. Zusammensetzung nach Anspruch 6, **dadurch gekennzeichnet, dass** sie eine Partikelgröße von 5 bis 10 µm besitzt.

8. Zusammensetzung nach einem der vorhergehenden Ansprüche, **dadurch gekennzeichnet, dass** sie eine spezifische Oberfläche von 1 bis 2 m²/g aufweist.

9. Verfahren zur Herstellung einer Zusammensetzung nach einem der Ansprüche 1 bis 8, das die folgenden Schritte umfasst:
- Mischen eines Vorläuferstoffs auf Grundlage von Lithium, Nickel und Mangan unter stöchiometrischen Bedingungen mit einem Überschuss an Lithium von 1 bis 5 Mol-%;
- Unterziehen dieses Gemischs einer ersten Wärmebehandlung bei einer Temperatur von 550 bis 600°C;
- nach der ersten Wärmebehandlung, Unterziehen dieses Gemischs einer zweiten Wärmebehandlung bei einer Temperatur von über 700°C, vorzugsweise über 800°C, kombiniert mit einer Abkühlung in einem sauerstoffhaltigen Medium.

10. Elektrode, die als elektrochemisch wirksames Material eine Zusammensetzung nach einem der Ansprüche 1 bis 8 umfasst.

11. Elektrode nach Anspruch 10, **dadurch gekennzeichnet, dass** sich die Zusammensetzung in Form einer Nanodispersion darstellt, die einem leitenden Additiv und/oder organischen Bindemittel beigemischt ist.

12. Akkumulator, der mindestens eine erste Elektrode nach Anspruch 10 oder 11 sowie eine zweite Elektrode umfasst, die aus einem Material hergestellt ist, das Lithiumionen aufnehmen kann, wobei die Elektroden durch einen elektrolytgetränkten Separator getrennt sind.

13. Batterie, die mindestens einen Akkumulator nach Anspruch 12 umfasst.
